**Europäisches Patentamt**

**European Patent Office**

**Office européen des brevets**

(11) Veröffentlichungsnummer : **0 338 263 B1**

# EUROPÄISCHE PATENTSCHRIFT

(45) Veröffentlichungstag der Patentschrift :
03.06.92 Patentblatt 92/23

(51) Int. Cl.$^5$ : **B60B 21/10, B60C 15/02**

(21) Anmeldenummer : **89104983.5**

(22) Anmeldetag : **20.03.89**

(54) **Luftbereiftes Fahrzeugrad.**

(30) Priorität : **15.04.88 DE 3812492**

(43) Veröffentlichungstag der Anmeldung :
**25.10.89 Patentblatt 89/43**

(45) Bekanntmachung des Hinweises auf die
Patenterteilung :
**03.06.92 Patentblatt 92/23**

(84) Benannte Vertragsstaaten :
**BE DE ES FR GB IT**

(56) Entgegenhaltungen :
**DE-A- 3 601 316**

(73) Patentinhaber : **Continental AG**
**Königsworther Platz 1 Postfach 1 69**
**W-3000 Hannover 1 (DE)**

(72) Erfinder : **Frerichs, Udo**
**Buchenweg 7**
**W-3012 Langenhagen 8 (DE)**

## Beschreibung

Die Erfindung betrifft ein luftbereiftes Fahrzeugrad mit einer starren Felge, die im wesentlichen sich nach radial innen erstreckende Felgenhörner, auf der radial inneren Seite je ein Montagehochbett für jeden Reifenwulst und auf der radial äußeren Seite Pannenlaufstützflächen aufweist, und mit einem Reifen aus Gummi oder gummiähnlichen Kunststoffen, dessen Wülste auf Felgensitzflächen radial innen von der Felge neben den Felgenhörnern angeordnet sind und dessen Karkasse in den Wülsten durch Umschlingen von zug- und druckfesten Wulstkernen verankert ist.

Fahrzeugräder dieser Art werden z.B. in der DE-A-30 00 428 und in der DE-A-36 21 849 beschrieben. Sie zeichnen sich durch einen hohen Fahrkomfort und durch günstige Pannenlaufeigenschaften aus. Wegen der Anordnung der Reifenwülste am radial inneren Umfang der Felge befinden sich die Felgenhörner im Innenraum des Reifens, so daß die Reifenseitenwände ungehindert einfedern und sich nach seitlich außen wölben können.

Die Reifenwülste liegen im wesentlichen in drei Bereichen an der Felge an, nämlich auf radial inneren Sitzflächen des Felgenkranzes, an den senkrechten Flächen der Felgenhörner und an den radial inneren Flächen der Felgenhörner. Durch die am Wulstkern angreifenden Karkaßkräfte werden radial nach innen gerichtete Kräfte und außerdem Kippmomente am Reifenwulst erzeugt, die an den drei genannten Paßflächen an der Felge aufgefangen werden müssen. Es ist manchmal nicht leicht, die Anteile dieser Paßflächen für den gesamten Wulstsitz an der Felge optimal auszuwählen. Diese Schwierigkeiten nehmen bei nicht zu vermeidenden Toleranzen von in Serie gefertigten Felgen und Reifen noch zu.

Zur Lösung der geschilderten Probleme wird in der DE-A-36 21 849 vorgeschlagen, daß ein ring- und/oder scheibenförmiger Stützkörper zur Aufnahme von Radialkräften und Kippmomenten des Wulstes an der radial inneren Fläche des Wulstes zumindest im axial inneren Bereich anliegt und daß der Stützkörper relativ zur Felgendrehachse an nichtelastischen Teilen des Fahrzeugrads zentriert ist. Bei dieser Lösung ist jedoch ein weiteres Bauteil in Form des ring-oder scheibenförmigen Stützkörpers erforderlich, und es müssen Zentriermittel an der Felge vorgesehen werden.

Der vorliegenden Erfindung liegt deshalb die Aufgabe zugrunde, einen verbesserten Wulstsitz mit einfacheren Mitteln zu erzeugen.

Diese Aufgabe wird erfindungsgemäß dadurch gelöst, daß die Felgenhornhöhe und die Wulsthöhe derart aufeinander abgestimmt sind, daß sich beim drucklosen und unbelasteten Reifen zwischen dem Felgenhorn auf Höhe des radial inneren Scheitelpunkts und der benachbarten Reifeninnenwand ein Abstand von 0,5 bis 3 mm befindet.

Der Hauptvorteil der Erfindung ist darin zu sehen, daß Doppelpassungen an der Felgensitzfläche und an der Dichtfläche am Felgenhorn vermieden werden.

Nachfolgend wird ein Ausführungsbeispiel der Erfindung anhand einer Zeichnung näher erläutert. Es zeigt

Fig. 1 ein Fahrzeugrad in drucklosem Zustand in einem radialen Teilschnitt,

Fig. 2 einen vergrößerten Ausschnitt des Fahrzeugrads gemäß Fig. 1.

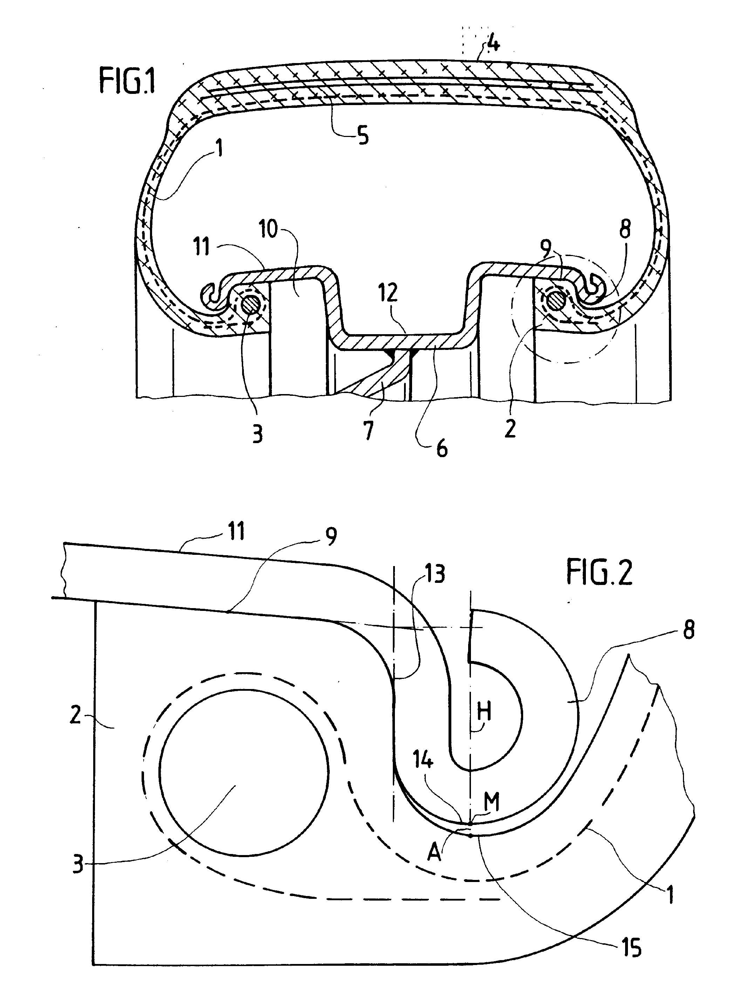

Der beim Fahrzeugrad der Fig. 1 verwendete Luftreifen besteht im wesentlichen aus Gummi oder gummiähnlichen Kunststoffen und weist eine Radialkarkasse 1 auf, die in den Wülsten 2 durch Umschlingen von zug- und druckfesten Wulstkernen 3 verankert ist. Zwischen der Lauffläche 4 und der Radialkarkasse 1 befindet sich ein üblicher Verstärkungsgürtel 5. Die einteilige Felge 6, die als sogenannte Schulterhochbettfelge ausgebildet ist (vergl. DE-OS 30 00 428), ist an einer Radschüssel 7 befestigt und weist seitlich außen je ein sich im wesentlichen nach radial innen erstreckendes Felgenhorn 8 auf, das in üblicher Weise zum Halten des Reifenwulstes 2 auf der Felge 6 dient. Neben den Felgenhörnern 8 befinden sich Felgensitzflächen 9, die im Falle von PKW-Felgen um ca. 5° geneigt zur Felgendrehachse verlaufen und an denen die Reifenwülste 2 unmittelbar anliegen. Axial innen von einem jeden Reifenwulst 2 befindet sich ein Montagehochbett 10, dessen mittlerer Durchmesser größer ist als der größte von den Felgensitzflächen 9 gebildete Durchmesser. Die radial äußeren Teile der Felge 6 bilden Pannenlaufstützflächen 11, die durch ein radial äußeres Felgentiefbett 12 in zwei Teilflächen aufgeteilt werden.

Fig. 2 zeigt einen vergrößerten Ausschnitt des Fahrzeugrads der Fig. 1. Der Reifenwulst 2 liegt an der Felgensitzfläche 9 sowie an der axial inneren Fläche 13 des Felgenhorns 8 unmittelbar an, während sich zwischen der radial inneren Fläche 14 des Felgenhorns 8 und der benachbarten Reifeninnenwand 15 ein Abstand A befindet. Auf Höhe des radial innen liegenden Scheitelpunkts M des Felgenhorns beträgt der Abstand A im Falle von Reifen für Personenkraftwagen 0,5 bis 1,5 mm, bevorzugt 0,5 bis 1,0 mm. Im Falle von Fahrzeugrädern für Lastkraftwagen kann der Abstand A bis zu 3 mm betragen. Der Reifenwulst 2 ist so auszulegen, daß sich der Abstand A nach der Reifenmontage im unbelasteten und drucklosen Zustand vorliegt. Bei Überdrücken bis zu 0,3 bar ändert sich der Abstand A nur geringfügig. Bei sich erhöhenden Innendruck nehmen

2

die Karkaßkräfte zu und die Fläche 15 legt sich allmählich an die Fläche 14 des Felgenhorns 8 an und übernimmt bei Betriebsreifendruck eine zusätzliche Dichtfunktion.

Der Abstand zwischen der Fläche 14 und der Fläche 15 im drucklosen Zustand nimmt vom Punkt M nach axial innen hin allmählich ab, indem die Fläche 15 etwa tangential in die Fläche 14 einläuft. Bei Fahrzeugrädern für Personenkraftwagen beträgt die Felgenhornhöhe H im Beispiel der Fig. 1 11 mm. Dabei wird H in der Weise ermittelt, daß man zunächst die Schnittlinie zwischen der Felgensitzfläche 9 und der axial inneren Fläche 13 des Felgenhorns 8 ermittelt und dann den radial inneren Punkt M des Felgenhorns 8 auf diese Linie projiziert.

Es sollte angemerkt werden, daß bei der beschriebenen Auslegung des Reifenwulstes 2 die radial äußere Fläche des Wulstes 2 drucklos oder aber mit einem definierten Anpreßdruck an der Felgensitzfläche 9 anliegt.

## Patentansprüche

1. Luftbereiftes Fahrzeugrad mit einer starren Felge, die im wesentlichen sich nach radial innen erstreckende Felgenhörner, auf der radial inneren Seite je ein Montagehochbett für jeden Reifenwulst und auf der radial äußeren Seite Pannenlaufstützflächen aufweist, und mit einem Reifen aus Gummi oder gummiähnlichen Kunststoffen, dessen Wülste auf Felgensitzflächen radial innen von der Felge neben den Felgenhörnern angeordnet sind und dessen Karkasse in den Wülsten durch Umschlingen von zug- und druckfesten Wulstkernen verankert ist, **dadurch gekennzeichnet,** daß die Felgenhornhöhe (H) und die Wulsthöhe derart aufeinander abgestimmt sind, daß sich beim drucklosen und unbelasteten Reifen zwischen dem Felgenhorn (8) auf Höhe des radial inneren Scheitelpunkts (M) und der benachbarten Reifeninnenwand (15) ein Abstand (A) von 0,5 bis 3 mm befindet.

2. Fahrzeugrad nach Anspruch 1, dadurch gekennzeichnet, daß im Falle eines Rades für Personenwagen der Abstand (A) zwischen 0,5 und 1,5 mm liegt.

3. Fahrzeugrad nach Anspruch 1 oder 2, dadurch gekennzeichnet, daß die Felgenhornhöhe (H) bei Felgen für Personenwagen 11 mm beträgt.

## Claims

1. Vehicle wheel which is fitted with a pneumatic tyre, said wheel having a rigid rim which comprises substantially radially inwardly extending rim flanges, an assembly high bed for each tyre bead being provided on the respective radially inner surface and puncture run-on supporting faces being provided on the respective radially outer surface, and said wheel having a tyre formed from rubber or rubber-like plastics materials, the beads of said tyre being disposed on rim seating surfaces radially internally of the rim adjacent the rim flanges, and the carcase of said tyre being secured in the beads by being looped around substantially inextensible and pressure resistant bead cores, characterised in that the rim flange height (H) and the bead height are adapted to one another so that, in the event of the tyre becoming pressureless and unloaded, a spacing (A) of 0.5 to 3 mm is yrovided between the rim flange (8) on a level with the radially inner vertical point (M) and the adjacent inner wall (15) of the tyre.

2. Vehicle wheel according to claim 1, characterised in that, in the case of a wheel for passenger vehicles, the spacing (A) is between 0.5 and 1.5 mm.

3. Vehicle wheel according to claim 1 or 2, characterised in that, in the case of rims for passenger vehicles, the rim flange height (H) is 11 mm.

## Revendications

1. Roue de véhicule chaussée d'un pneumatique et comprenant une jante rigide présentant des cornes de jante orientées sensiblement radialement vers l'intérieur et sur le côté radialement interne de chacun desquelles se trouve une semelle verticale de montage destinée à chaque talon du pneumatique et sur le côté radialement extérieur de chacune desquelles se trouvent des surfaces d'appui pour roulement après crevaison, ladite roue étant équipée d'un pneumatique de caoutchouc ou de matière plas tique analogue à du caoutchouc dont les talons sont dispo sés sur des surfaces d'assise de la jante, radialement à l'intérieur de la jante, à côté des cornes de cette der nière et dont la carcasse est accrochée dans les talons par enroulement autour de noyaux des talons résistant à la traction et à la compression, caractérisée en ce que la hauteur (H) des cornes de la jante et la hauteur des talons sont coordonnées l'une par rapport à l'autre de manière que, lorsque le pneumatique est dégonflé et n'est pas sous char ge, il existe une distance (A) de 0, 5 à 3 mm entre la corne (8) de la jante, au niveau du sommet radialement intérieur (M), et la paroi intérieure adjacente (15) du pneumatique.

2. Roue de véhicule selon la revendication 1, caractérisée en ce que, dans le cas d'une roue pour voi ture automobile, la distance (A) est comprise en 0, 5 et 1,5 mm.

3. Roue de véhicule selon la revendication 1 ou 2, caractérisée en ce que la hauteur (H) des cornes de la jante est de 11 mm lorsqu'il s'agit de jantes pour voitures automobiles.

EP 0 338 263 B1

FIG.1

FIG.2

5